# EUROPÄISCHE PATENTSCHRIFT

(11) **EP 3 177 136 B1**
(45) Veröffentlichungstag und Bekanntmachung des Hinweises auf die Patenterteilung: **03.10.2018**
(21) Anmeldenummer: 15794815.9
(22) Anmeldetag: 07.08.2015
(51) Int. Cl.: A01K 45/00

(54) **VERFAHREN UND VORRICHTUNG ZUR BEARBEITUNG DER KALKSCHALE VON BRUTEIERN ZUR UNTERSTÜTZUNG DES SCHLUPFES VON KÜKEN IN DER MAST- UND GEFLÜGELPRODUKTION**
METHOD AND APPARATUS FOR HANDLING THE SHELL OF HATCHING EGGS IN ORDER TO HELP CHICKS HATCH ON INDUSTRIAL POULTRY FARMS
PROCÉDÉ ET DISPOSITIF SERVANT À TRAITER LES COQUILLES D'OEUFS AFIN D'AIDER À L'ÉCLOSION DE POUSSINS DANS LE CADRE DE LA PRODUCTION INDUSTRIELLE DE VOLAILLES

(30) Priorität: 08.08.2014 DE 102014011931
(43) Veröffentlichungstag der Anmeldung: 14.06.2017
(73) Patentinhaber: EVONTA-Technology GmbH, 01109 Dresden (DE)
(72) Erfinder: MEISSNER, Sven, 09618 Brand-Erbisdorf (DE); FISCHER, Björn, 09212 Limbach-Oberfrohna OT Wolkenburg (DE)
(74) Vertreter: Krause, Wolfgang
(86) Internationale Anmeldenummer: PCT/DE2015/000403
(87) Internationale Veröffentlichungsnummer: WO 2016/019943

(56) Entgegenhaltungen:
- DE-A1-102010 019 683
- DE-C- 387 028
- DE-T2- 60 105 175

## Beschreibung

Die Erfindung betrifft ein Verfahren und eine Vorrichtung zur Bearbeitung der Kalkschale von Bruteiern zur Unterstützung des Schlupfes von Küken in der Mast- und Geflügelproduktion, siehe z.B. DE 387 028 C.

In der industriellen Geflügelproduktion werden Bruteier von Legehennenlinien oder Geflügelmastlinien zu Beginn des Brutprozesses in so genannten Bruthorden eingelegt, wobei die Eier derart platziert werden, dass der stumpfe Pol des Eies und somit die im Ei befindliche Luftkammer nach oben gerichtet sind. Der etwas spitzere Pol des ovalen Eies ist dabei nach unten gerichtet. Anschließend werden die Bruthorden zunächst in einen Hordenwagen oder in Hordenregalen in den Brutschrank eingebracht. Nach einer zeitlich vorgegebenen Vorbrut werden die Bruteier dann auf so genannte Schlupfhorden zum Schlüpfen der Küken umgelagert.

Im Allgemeinen richtet sich vor dem Schlupf nach etwa 21 Tagen Brutzeit das entwickelte Kücken innerhalb des Eies so aus, dass sein Kopf in die Nähe der Luftkammer am stumpfen Pol des Eies zu liegen kommt. Nach dem Durchstoßen der inneren Kammermembran perforiert das Küken mit Hilfe seines so genannten Eizahns, auch Eischwiele genannt, im Eiinneren die äußere Schalenmembran sowie die harte Kalkschale.

Nach einer Phase von einigen Stunden beginnt das Küken sich zu drehen, meistens entgegen des Uhrzeigersinns und ritzt die Kalkschale im Bereich um den stumpfen Pol mit Hilfe des Eizahns rundherum auf, so dass an der rundum ausgebildeten Ritzstelle die Dicke der Kalkschale wesentlich verringert wird. Die entstandene Ritzstelle des Kükens liegt weitgehend im Bereich der Anbindung der Kammermembran an das Innere der Kalkschale. Durch Drücken und Heben des Nackens wird durch das Küken der entstandene Deckel schließlich abgesprengt.

Je nach Konstitution des Kükens und in Abhängigkeit von der Beschaffenheit der Kalkschale erstreckt sich der Schlupf über mehrere Stunden.

Dabei sind folgende Probleme vorhanden:
Da das Küken zur Bewerkstelligung des beschriebenen Prozesses eine vergleichsweise enorme Leistung vollbringen muss und manche Küken diese Leistung nicht vollends zur rechten Zeit aufbringen können, kommt es während und im Nachgang des Schlupfes zu Verlusten in Form von sogenannten Steckenbleibern. Durch erhöhte Beanspruchung der Nackenmuskulatur bedingt, entwickeln die Küken im Nachgang des Schlupfes zudem eine starke Hypertrophie, was zu einer Erhöhung der Kükensterblichkeit führen kann.
Das Problem hat insbesondere für Küken bestimmter Legehennenlinien eine entscheidende Bedeutung, da hier auf hohe Kalkschalenqualität und Dicke selektiert wurde (Qualitätsmerkmal: Konsumei). Das Problem hat weiterhin Bedeutung für alle Geflügelarten mit sehr dicken und robusten Kalkschalen.

In der Druckschrift DE 600 36 492 T2 ist ein Verfahren zur Klassifizierung von Geflügeleiern mit folgenden Schritten angegeben:
- Bereitstellen einer Mehrzahl von Eiern, wobei jedes Ei eine entsprechende physische Eiposition aufweist,
- Messen der Temperaturen der Eier,
- Klassifizieren der Eier als eine Funktion der Temperaturen der Eier, wobei der Schritt des Klassifizierens enthält: Bestimmen einer Tendenz der Raumtemperatur zwischen der Mehrzahl der Eier, und
- Identifizieren von lebenden Eiern aus der Mehrzahl von Eiern unter Verwendung der Tendenz der Raumtemperatur.

Ein Problem besteht darin, dass sich die genannte Klassifizierung mit der Lebensfähigkeit anhand von Temperaturdaten befasst. Die Möglichkeit der Injektion zur Verbesserung der Lebensfähigkeit nach dem Schlupf der Küken wird erwähnt. Auch wird die Beimpfung von Bruteiern mittels einer Injektionsnadel erwähnt. Mit dem Einsatz von Injektionsnadeln könnten aber am Ei Mikrorisse, am Kücken Verletzungen sowie innerhalb des Eies Kontaminationen durch Keimverschleppung auftreten.
Diese Maßnahmen dienen aber nicht einer keimfreien Schlupfunterstützung des im Brutei befindlichen Kükens.

In der Druckschrift DE 10 2010 019 683 A1 wird ein Verfahren zur Bearbeitung von Eierschalen beschrieben, bei dem die harte Eierschale an bestimmten Stellen mit Perforationen versehen wird, wobei die Perforationen in Form von ansprechenden Mustern angeordnet sind. Die Perforationen sollen auch linienförmige Sollbruchstellen sein, die in die Eierschale eingeformt werden und die als Zick-Zack- oder Wellenlinie oder sonstige Linienführung vorgegeben sind.
Das Problem besteht aber darin, dass sich die Anwendung nicht auf Bruteier mit sich darin entwickelnden Küken, sondern sich auf die Anwendung in der Eier verarbeitenden Industrie und für Deko-Zwecke bezieht. Die mittels eines Lasers eingebrachten Sollbruchstellen dienen der Verbesserung der maschinellen Öffnung der Eier zum Zweck der Separierung des Eiinhalts (Eigelb, Eidotter) zur industrieellen Weiterverarbeitung oder schlicht zur Aufbringung/Einbringung eines dekorativen Musters.

Das Problem besteht darin, dass aus dem bekannten Verfahren eine Schlupferleichterung oder eine Schlupfsynchronisation mit einer Verkürzung des Schlupfzeitraums einer praktischen Anzahl von Küken nicht ableitbar ist.

In der Druckschrift DE 601 05 175 T2 ist ein Verfahren zur Öffnung von Eiern beschrieben, bei dem
- die Eierschale mit einem Impulslaserstrahl eingekerbt wird, um in der Eierschale einen punktierten Anriss entlang einer Umfangslinie zu bilden, und anschließend
- die Eierschale unter Verwendung des Anrisses geöffnet wird.

Ein Problem besteht darin, dass unter Anwendung eines Bearbeitungslasers eine Vorbereitung der maschinellen Verarbeitung von Konsumeiern, d.h. Eiern ohne sich darin entwickelndem Küken, für die Aufschlagindustrie zur Weiterverarbeitung des Eininhalts durchgeführt wird. Eine Schlupfunterstützung von im Brutei befindlichen Küken gehört daher nicht zur Aufgabenstellung dieses Verfahrens.

Der Erfindung liegt deshalb die Aufgabe zugrunde, ein Verfahren und eine Vorrichtung zur Bearbeitung der Kalkschale von Bruteiern zur Unterstützung des Schlupfes von Küken in der Mast- und Geflügelproduktion bereitzustellen, die derart geeignet ausgebildet sind, dass eine Schlupfunterstützung der Küken aller Geflügelarten erreicht werwerden kann und die Verluste durch Steckenbleiber vermindert werden. Außerdem soll die Schlupfzeit synchronisiert und wesentlich verringert werden.

Die Aufgabe wird durch die Merkmale der Patentansprüche 1 und 8 gelöst. Es wird ein Verfahren zur Bearbeitung der Kalkschale von Bruteiern zur Unterstützung des Schlupfes von Küken in der Mast- und Geflügelproduktion, wobei sich in den Bruteiern Küken entwickeln,
gemäß dem Kennzeichenteil des Patentanspruchs 1 bereitgestellt,
bei dem zumindest mindestens ein Brutei und zumindest dessen Luftkammer detektiert werden und die Kalkschale des detektierten Bruteies oberhalb der Grenzen der Luftkammer mit einer vorgegebenen, vor dem Schlupf ausgeführten Schlupf-Sollbruchstelle zur Schlupfunterstützung des aus dem Brutei schlüpfenden Kükens versehen wird, zumindest folgende Schritte umfassend
- Zuführung der Bruteier mittels einer Zuführungseinrichtung,
- Erfassung jeweils eines auf die Bruteier und zumindest deren Luftkammern bezogenen Bereiches mittels einer Detektionseinrichtung und Umwandlung des erfassten, auf die gehalterten Bruteier bezogenen Bild-Bereiches in elektrische Daten,
- Verarbeitung der umgewandelten elektrischen Bereichs-Daten zur Positionierung einer Bearbeitungseinrichtung zur Erzeugung einer Sollbruchstelle an einer für die Sollbruchstellenerzeugung vorgegebenen Position in Bezug auf den zu bearbeitenden Kalkschalenbereich des Bruteies,
- Bearbeitung der Bruteier mittels der Bearbeitungseinrichtung zur Erzeugung einer Sollbruchstelle im oberhalb der Luftkammer zugeordneten Kalkschalenbereich, wobei die von außen durchgeführte Bearbeitung der Kalkschale des Bruteies oberhalb der mit der Kalkschale vorhandenen Grenzen der innerhalb des Bruteies befindlichen, zum stumpfen Pol gerichteten Luftkammer durchgeführt wird, und
- Abführung der Bruteier mit der Sollbruchstelle mittels einer Abführungseinrichtung.

Die Erzeugung der Schlupf-Sollbruchstelle im Kalkschalenbereich des stumpfen Pols vorzugsweise oberhalb der Grenzen der inneren Membran der Luftkammer zur Kalkschale stellt eine definierte, zielgerichtete Bearbeitung am Brutei dar, wobei die Ausgangspositionsbestimmung mittels einer Detektionseinrichtung erfolgt und die der Sollbruchstellen-Ausführung zugeordnete Endpositionierung des Bruteies, die zur Sollbruchstellen-Ausführung mit der zugehörigen Einstellpositionierung der Bearbeitungseinrichtung übereinstimmt, mittels des Einsatzes von in der Auswerteeinheit und Steuereinheit gespeicherten programmtechnischen Mitteln durchgeführt wird.

Mit Hilfe eines Abstandssensors oder eines Triangulationssensors oder eines Streiflichtscanners kann ein dreidimensionales Oberflächenprofil der zugeführten Bruteier erzeugt und eine genaue Positionierung der Bearbeitungseinrichtung zur Erzeugung einer Sollbruchstelle an einer für die Sollbruchstellenerzeugung bevorzugten Position auf dem zu bearbeitenden Kalkschalenbereich des Bruteis erreicht werden.

Es kann eine Einlage der Bruteier mittels der Transporteinrichtung an der Detektionseinrichtung und der Bearbeitungseinrichtung zur Erzeugung der Sollbruchstelle vorbeibewegt werden, wobei von der Detektionseinrichtung der der Detektioneinrichtung zugewandte Bereich des Bruteies eindimensional oder zweidimensional oder dreidimensional erfasst wird, wobei die Daten anschließend zur weiteren Verarbeitung in die Auswerte- und Steuereinheit über elektrische Verbindungsleitungen geleitet werden, wobei in der Auswerte- und Steuereinheit die erhaltenen räumlichen Daten oder die Eiabstandsdaten des Abstandssensors oder des Triangulationssensors mittels aktivierter programmtechnischer Mittel verarbeitet werden und die verarbeiteten erhaltenen Signale an die Bearbeitungseinrichtung zur Erzeugung der Sollbruchstelle weitergeleitet werden.

Die von außen durchgeführte Bearbeitung der Kalkschale des Bruteies kann auch mittels mechanischer, chemischer oder Wasserstrahl-Werkzeuge durchgeführt und die Sollbruchstelle kann in jedem vorgegebenen Kalkschalenbereich oberhalb der Grenzen der Luftkammer erzeugt werden.

Die Vorrichtung zur Bearbeitung von Kalkschalen von Bruteiern zur Unterstützung des Schlupfes von Küken in der Mast- und Geflügelproduktion, wobei sich in den Bruteiern Küken entwickeln, unter Einsatz des vorgenannten Verfahrens umfasst gemäß dem Kennzeichenteil des Patentanspruchs 8 zumindest
- eine Transporteinrichtung, die zumindest zur Zuführung und Abführung mindestens eines Bruteies dient,
- eine Detektionseinrichtung zur Erfassung eines Positionsbereiches mindestens eines Bruteies und zumindest der Grenzen der Luftkammer,
- eine Auswerte- und Steuereinheit, die die Eipositionsdaten und die Positionsdaten einer Bearbeitungseinrichtung zur Erzeugung einer Sollbruchstelle aufnimmt und verarbeitet,
- die Bearbeitungseinrichtung zur Erzeugung einer Sollbruchstelle in der Kalkschale, die zur Bearbeitung Bearbeitungssignale aus der Auswerte- und Steuereinheit erhält,
wobei nach der Bearbeitung der Kalkschale die Kalkschale oberhalb der Grenzen der inneren Membran der Luftkammer zur Kalkschale im Bereich des stumpfen Pols eine ausgebildete Schlupf-Sollbruchstelle zur Unterstützung des Schlupfes der Küken aufweist.

In der Vorrichtung kann der Transporteinrichtung wahlweise mindestens eine Einlage mit Bruteiern zugeordnet sein, in der die Bruteier gehaltert einsortiert sind.

Die Detektionseinrichtung kann zur Erfassung eines auf die Bruteier bezogenen Bereiches aus der Einlage oder eines Positionsbereiches mindestens eines Bruteies in der Einlage dienen, wobei die Detektionseinrichtung eine Markierung der Einlage erfasst und wobei aus den festgelegten Abständen der Eiaufnahme-Ausbuchtungen der Einlage zueinander und zur Markierung der Einlage der Positionsbereich des jeweiligen Bruteies in der mit programmtechnischen Mitteln ausgerüsteten Auswerte- und Steuereinheit ermittelt werden können.

Standardisierte oder auch vorab vermessene Einlagen mit konstanten Abständen für die Eieraufnahme erleichtern die Bestimmung der Positionsbereiche der einsortierten Bruteier insbesondere für die Detektionseinrichtungen, die nur auf die Erfassung der Einlage ausgerichtet sind.

Andererseits kann die Detektionseinrichtung einen Sensor oder ein Sensor-Array wahlweise mit einem Abstandssensor oder einem Triangulationssensor umfassen, wobei Sensor oder ein Sensor-Array und/oder einer der beiden wahlweise beigefügten Sensoren die Positionsbereichsdaten des zugeführten Bruteies erfassen.

Die Bearbeitungseinrichtung kann eine laser-optische Einrichtung sein, die mit ihrem Laserstrahl eine Perforation bzw. eine Schwächung der Kalkschale durchführt und die Sollbruchstelle ausbildet.

Die Transporteinrichtung kann als Zuführungseinrichtung und als Abführungseinrichtung in durchgängiger Form ausgebildet sein.

Zumindest ein als Detektionseinrichtung vorgesehener Sensor oder ein Sensor-Array oder ein Triangulationsscanner und die Bearbeitungseinrichtung zur Erzeugung der Sollbruchstelle können oberhalb der Transporteinrichtung sowie oberhalb der in der transportierten Horde/Einlage befindlichen Bruteier angeordnet sein.

Die vorgegebene Bearbeitung der harten Kalkschale des Bruteies kann zum Beispiel mittels mechanischer oder laser-optischer oder chemischer Werkzeuge durchgeführt werden. Durch das Einbringen einer definierten Sollbruchstelle entsprechenden Musters kann die Festigkeit der Kalkschale gezielt beeinflusst werden.
Da sich berührungsfrei arbeitende laser-optische Verfahren ideal in die Prozesse der Geflügelindustrie eingliedern lassen, wird vorzugsweise eine auf einem CO₂-Laser bzw. einem Nd:YAG-Laser oder Er:YAG-Laser basierende Vorrichtung zur Bearbeitung der harten Kalkschale von Bruteiern eingesetzt. Andere Laserverfahren können auch eingesetzt werden.

Folgende Vorteile können auftreten:
Neben einer Erhöhung des Schlupferfolges wird vor allem eine deutliche Senkung der Kükensterblichkeit erreicht. Zusätzlich kann es durch die Behandlung der Bruteier zu einer Synchronisation des Schlupfes der Küken einer Einlage und zu einer Reduzierung der mittleren Schlupfdauer im Brutbetrieb kommen.

Die dem Küken zuteil gewordene Schlupfunterstützung besteht darin, dass mittels einer positionsgenauen Bearbeitung der harten Kalkschale der Bruteier neben der inneren Aktivität des entwickelten Kükens zumindest von außen mittels der erfindungsgemäßen Vorrichtung zumindest eine Schlupf-Sollbruchstelle erzeugt werden kann, die gemeinsam mit der inneren rundum ausgelegten Ritzstelle des Kükens im Bereich der Anbindung der Kammermembran an das Eiinnere im Kalkschalenbereich weitgehend konform ausgebildet wird.

Weiterbildungen und spezielle Ausgestaltungen des Verfahrens und der Vorrichtung sowie Details dazu werden in Unteransprüchen angegeben.

Die Erfindung wird anhand eines Ausführungsbeispiels mittels mehrerer Zeichnungen näher erläutert.

Es zeigen:
- Fig. 1: eine schematische Darstellung einer erfindungsgemäßen Vorrichtung zur Bearbeitung von Kalkschalen von Bruteiern zur Unterstützung des Schlupfes von Küken in der Mast- und Geflügelproduktion mit einer minimal ausgerüsteten Detektionseinrichtung im Bereich einer Einlage mit einsortierten Bruteiern,
- Fig. 1a: eine schematische Darstellung einer erfindungsgemäßen Vorrichtung zur Bearbeitung von Kalkschalen von Bruteiern zur Unterstützung des Schlupfes von Küken mit einer sensoraufgerüsteten Detektionseinrichtung oberhalb der mit Bruteiern gefüllten Einlage,
- Fig. 2: eine Seitenansicht eines ersten bearbeiteten Bruteies mit ersten Perforationslinien des Bruteies, wobei Fig. 2a die Draufsicht auf das Brutei mit einer mit Perforationslinien versehenen Sollbruchstelle darstellt,
- Fig. 3: ein zweites bearbeitetes Brutei mit einem Perforationslinienmuster im Bereich des stumpfen Pols des Bruteies, wobei Fig. 3a die Draufsicht auf das Brutei mit dem stumpfen Pol und der mit dem Perforationslinienmuster versehenen Sollbruchstelle darstellt,
- Fig. 4: ein drittes bearbeitetes Brutei mit einem Perforationslinienmuster im Bereich des stumpfen Pols des Bruteies, wobei Fig. 4a die Draufsicht auf das Brutei mit dem stumpfen Pol und der mit runden Perforationslinien versehenen Sollbruchstelle darstellt, und
- Fig. 5: eine vereinfachte schematische Darstellung eines Prozessdiagramms zur Erzeugung einer Sollbruchstelle.

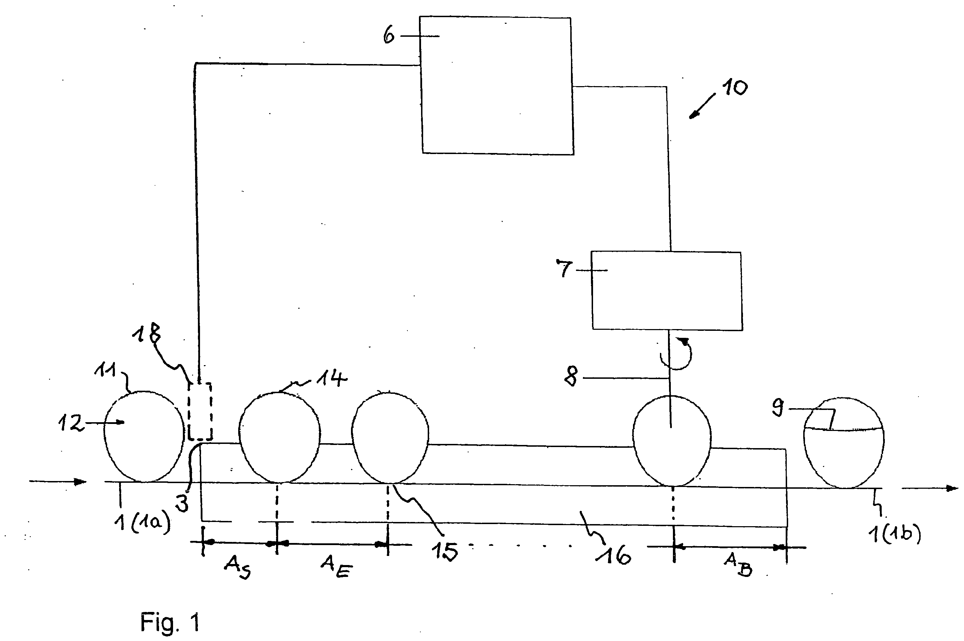

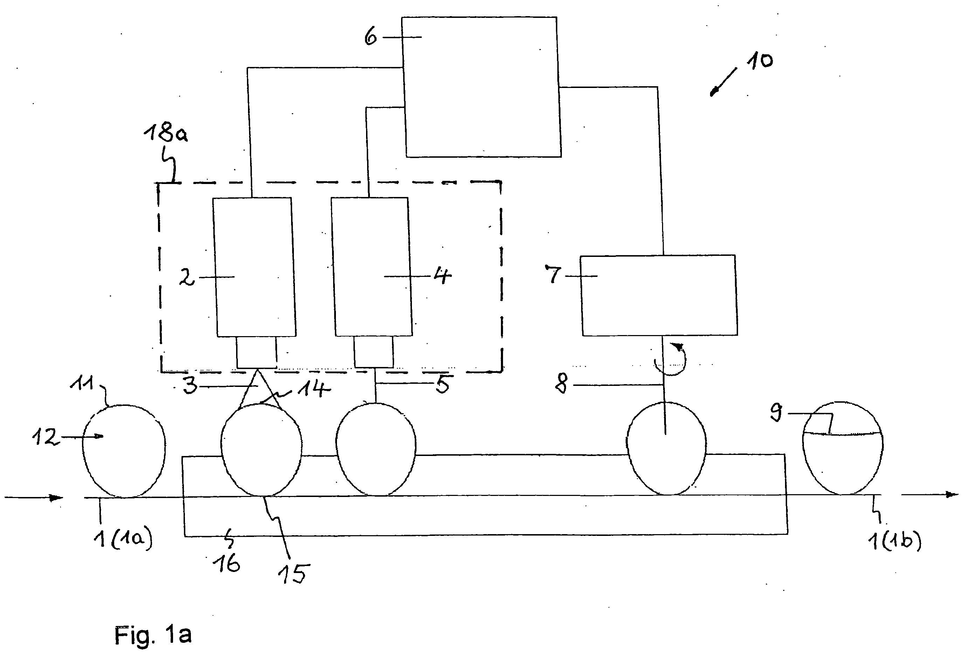

Die in Fig. 1 dargestellte Vorrichtung 10 zur Bearbeitung von Kalkschalen 11 von Bruteiern 12 zur Unterstützung des Schlupfes von Küken, wobei die Bruteier 12 in einer Einlage 16 gehaltert einsortiert werden, umfasst zumindest
- eine Transporteinrichtung 1, der die Einlage 16 in Form einer Horde zugeordnet ist, in der die Bruteier 12 mit dem stumpfen Pol 14 nach oben einsortiert sind, wobei die Einlage 16 derart ausgebildet ist, dass die Bruteier 12 in einer gleichabständigen Anordnung gelagert sind.
- mindestens eine Detektionseinrichtung 18, die zumindest einen Marker oder eine Markierung oder eine Kante an der Einlage 16 erfasst, aus denen die vorgegebenen Positionsbereiche der Bruteier 12 und der Grenzen 17 der inneren Membran 19 der Luftkammer 13 zur Kalkschale 11 über vorgegebene Abstände innerhalb der Einlage 16 ermittelt werden,
- eine Auswerte- und Steuereinheit 6, die mit der Detektionseinrichtung 18 zumindest über eine Verbindungsleitung verbunden ist,
- eine Bearbeitungseinrichtung 7 zur Erzeugung einer Sollbruchstelle 9 in der Kalkschale 11,
wobei nach der Bearbeitung 8 der Kalkschale 11 die Kalkschale 11 im Bereich der Luftkammer 13 eine ausgebildete Schlupf-Sollbruchstelle 9 oberhalb der Grenzen 17 der inneren Membran 19 der zum stumpfen Pol 14 gerichteten Luftkammer 13 zur Unterstützung des Schlupfes der Küken aus dem Brutei 12 aufweist und das bearbeitete Brutei 12 zur weiteren Bebrütung abgeführt wird.

Im Allgemeinen sind, wie in Fig. 1 gezeigt ist, die Einlagen 16 z.B. palettenartig derart ausgebildet, dass die Abstände A_{E} zwischen den Bruteiern 12 selbst und die Abstände A_{B} (Beginn der Einlage) und die Abstände A_{S} (Schluss der Einlage) zwischen den Bruteiern 12 und z.B. einem Rand der Einlage 16 standardisiert sind und die standardisierten Werte bereits in der Auswerte- und Steuereinheit 6 gespeichert vorhanden sind oder sein können, so dass sie signaltechnisch problemlos zur Einstellung der jeweiligen Position der Bearbeitungseinrichtung 7 zur Erzeugung der Sollbruchstelle 9 für die Berechnung/Ermittlung der zugeordneten Kalkschalenbereiche der Bruteier 12 verarbeitet werden können.

Das heißt, dass vorzugsweise für standardisierte oder vorab vermessene Einlagen 16 mit konstanten Abständen A_{B}, A_{E}, As der Eiaufnahme-Ausbuchtungen zur Bestimmung der Positionsbereiche der einsortierten Bruteier 12 Detektionseinrichtungen 18 eingesetzt sein können, die nur auf die erforderliche Erfassung der Einlage 16 ausgerichtet sind, so dass die Positionsbereiche der Bruteier 12 aus den konstanten Abständen A_{B}, A_{E}, A_{S} ermittelbar sind.

Die Sollbruchstelle 9 kann eine Führungsbahn 9a oder ein Muster 9b, 9c, 9d von mehreren Bahnen in Form von Kreuzen oder Kreisen oder anderen geometrischen Formen darstellen.

Die in Fig. 1a dargestellte modifizierte Vorrichtung 10 zur Bearbeitung von Kalkschalen 11 von Bruteiern 12, in denen sich entwickelnde Küken befinden, umfasst zumindest zur Unterstützung des Schlupfes von Küken
- eine Transporteinrichtung 1, der eine Einlage 16 in Form einer Horde zugeordnet ist, in der die Bruteier 12 vorzugsweise mit dem stumpfen Pol 15 nach oben einsortiert sind,
- eine Detektionseinrichtung 18a, die einen Sensor 2 oder einen Sensor-Array mit einem erfassten Bildbereich 3 und wahlweise mindestens einen Abstandssensor 4 oder mindestens einen Triangulationssensor 5 aufweist,
- eine Auswerte- und Steuereinheit 6, die mit der Detektionseinrichtung 18a verbunden ist,
- eine Bearbeitungseinrichtung 7 zur Erzeugung einer Schlupf-Sollbruchstelle 9 in der Kalkschale 11,
wobei nach der Bearbeitung 8 der Kalkschale 11 die Kalkschale 11 eine die ursprüngliche Dicke der Kalkschale 11 verringernde Schlupf-Sollbruchstelle 9 aufweist und das bearbeitete Brutei 12 abgeführt wird.

In Fig. 1a wird vorzugsweise der Bereich des stumpfen Pols 14 mit einer Schlupf-Sollbruchstelle 9 versehen. Liegen die Bruteier 12 in einer anderen Weise, z.B. bäuchlings, in einer Einlage 16, so kann ein anderer Kalkschalenbereich mit einer anders gestaltbaren Sollbruchstelle 9 versehen sein.
Zusätzlich zur oder einschließlich einer Detektionseinrichtung 18a in Form eines Sensors 2 oder eines Sensor-Arrays kann wahlweise ein Abstandssensor 4 oder ein Triangulationssensor 5 eingesetzt sein. Die über eine einfache Detektionseinrichtung 18 hinaus angeordneten Sensoren 2 oder 4, 5 dienen im Wesentlichen zur Absicherung der Genauigkeit bei einem kontinuierlichen Prozessverlauf.

Der von der Detektionseinrichtung 18a erfasste Bereich 3 kann eindimensional sein oder ein 2D-Bildbereich oder ein 3D-Bildbereich sein.

Die Bearbeitungseinrichtung 7 zur Erzeugung einer Sollbruchstelle 9 kann eine laser-optische Einrichtung sein, die eine die Kalkschale 11 schwächende Sollbruchstelle 9 mittels einer Perforation der Kalkschale 11 durchführt. Die laser-optische Einrichtung 7 kann als bewegbare Einrichtung ausgebildet sein.

Die Zuführungseinrichtung 1a und die Abführungseinrichtung 1b stellen in Fig. 1 und Fig. 1a eine durchgängige Transporteinrichtung 1 dar.

In der Auswerte- und Steuereinheit 6 sind zur Positionierung und Auslösung der Sollbruchstellen-Bearbeitung programmtechnische Mittel eingespeichert, die den Prozessablauf nach einem festgelegten Algorithmus abarbeiten.

Der Sensor oder das Sensor-Array 2 als Detektionseinrichtung 18 sendet den 2D-Bildbereich 3 der erfassten Draufsicht des Bruteies 12 der Auswerte- und Steuereinheit 6 über elektrische Verbindungsleitungen zu. Der Sensor oder das Sensor-Array 2 und die laser-optische Bearbeitungseinrichtung 7 sind oberhalb der Transporteinrichtung 1 sowie oberhalb der in der Schlupfhorde/Horde/Einlage 16 befindlichen Bruteier 12 angeordnet.

Die Horde/Einlage 16 der Bruteier 12 wird mittels der Transporteinrichtung 1 unterhalb des Sensors oder des Sensor-Arrays 2 und der laser-optischen Einrichtung 7 vorbeibewegt, wobei vom Sensors oder Sensor-Array 2 von der Draufsicht des Bruteies 12 der 2D-Bildbereich 3 oder ein 3D-Bildbereich erfasst wird, dessen Daten zur weiteren Verarbeitung in die Auswerte- und Steuereinheit 6 über elektrische Verbindungsleitungen geleitet werden. Dort werden die Bilddaten des 2D-Bildbereiches 3 oder des 3D-Bildbereiches gemeinsam mit den Ei-Abstandsdaten des Abstandssensors 4 mittels aktivierter programmtechnischer Mittel verarbeitet und die verarbeiteten erhaltenen Signale an die laser-optische Bearbeitungseinrichtung 7 zur Ausführung der Sollbruchstelle 9 weitergeleitet.

Mit Hilfe des Abstandssensor 4 oder des Triangulationssensors 5 wird eine genaue Positionierung der laser-optischen Bearbeitungseinrichtung 7 über dem Brutei 12 eingestellt. Die laser-optische Bearbeitungseinrichtung 7 erhält dazu Positionierungs- und Bearbeitungssignale von der Steuereinheit der Auswerteeinheit 6, die z.B. ein PC sein kann.

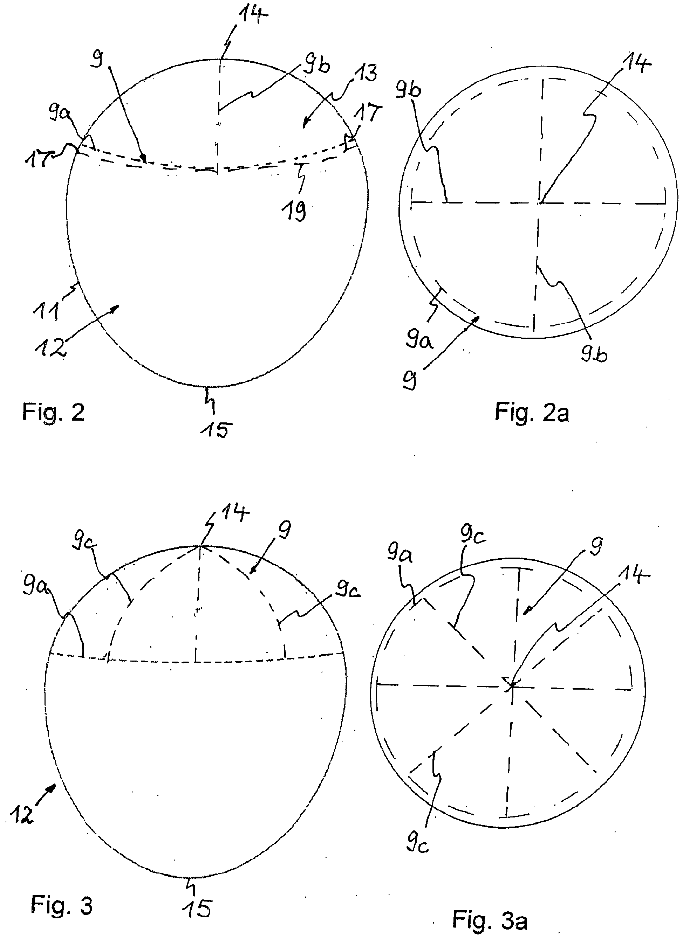

Im Allgemeinen befindet sich die Luftkammer 13 im Bereich des stumpfen Pols 14. Durch das Einbringen vorab definierter Sollbruchstellen 9 entsprechenden Musters, wie in Fig. 2, 2a und Fig. 3, 3a gezeigt ist, kann die Kalkschalenfestigkeit im Bereich der Luftkammer 13 oberhalb der Grenzen 17 der inneren Membran 19 zur Kalkschale 11 gezielt beeinflusst werden.

Die von außen aufgebrachte Sollbruchstelle 9 kann gemäß Fig. 2 und Fig. 2a eine weitgehend den innereilichen Grenzen 17 der inneren Membran 19 der Luftkammer /Luftblase 13 angepasste Führungsbahn 9a aufweisen. Diese kann beispielsweise mittels einer Durchlichttechnik ermittelt werden. Eine weitere Sollbruchstellen-Bahn 9b kann von der einen Seite der Führungsbahn 9a über den stumpfen Pol 14 auf die andere Seite der Führungsbahn 9a verlaufen, wobei die Führungsbahn 9a unmittelbar oberhalb der inneren Membran 19 der Luftkammer 13 und zum stumpfen Pol 14 gerichtet liegen kann.

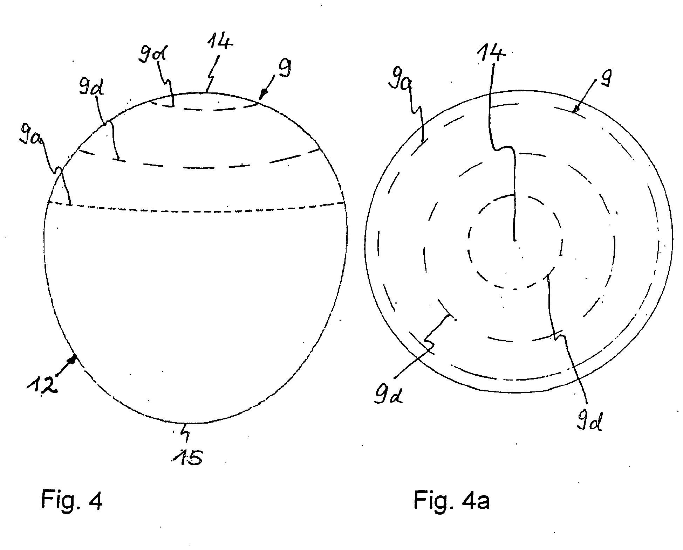

Des Weiteren können unterschiedliche Sollbruchstellen-Bahnen 9c, wie in Fig. 3 und Fig. 4 in vertikaler Richtung gezeigt ist, oder auch in Querrichtung, wie die runden Sollbruchstellen-Bahnen 9d in Fig. 4, 4a in Draufsicht von Seiten des stumpfen Pols 14 gezeigt ist, oder durch Kombination aller Möglichkeiten auf/in die Kalkschale 11 eingebracht sein.

Der Bereich um den stumpfen Pol 14 des Bruteies 12 muss nicht immer der Kalkschalenbereich sein, an dem die Sollbruchstelle 9 eingebracht werden muss. Je nach Situation und Bruteigröße sowie anderer geflügelspezifischer Eigenschaften insbesondere der veränderten Lage der Luftkammer 13 kann der zu bearbeitenden Kalkschalenbereich an einer anderen Stelle des Bruteies 12 festgelegt werden.

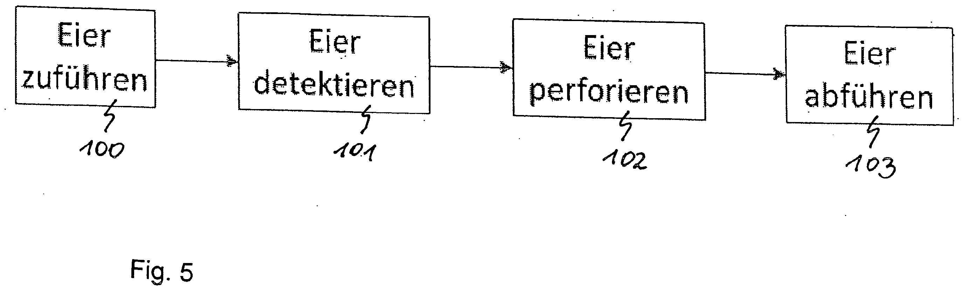

Das in Fig. 5 vereinfacht dargestellte Verfahren zur Bearbeitung der Kalkschale 11 von Bruteiern 12 zur Unterstützung des Schlupfes von Küken in der Mast- und Geflügelproduktion umfasst zumindest folgende Schritte
- Schritt: Zuführung 100 der Bruteier 12 mittels einer Transporteinrichtung 1,
- Schritt: Erfassung/Detektieren 101 der Positionen der Bruteier 12 sowie der an der Kalkschale 11 haftenden, umlaufenden Grenze 17 und der Luftkammer 13 an sich mittels einer Detektionseinrichtung 18, 18a,
- Schritt: Bearbeitung/Perforieren 102 der Bruteier 12 mittels einer Bearbeitungseinrichtung 7 zur Erzeugung einer Sollbruchstelle 9 in der Kalkschale 11, wobei die von außen durchgeführte Bearbeitung 102, 8 der Kalkschale 11 des Bruteies 12 oberhalb der mit der Kalkschale 11 vorhandenen Grenzen 17 der innerhalb des Bruteies 12 befindlichen, zum stumpfen Pol 14 gerichteten Luftkammer 13 durchgeführt wird,
- Schritt: Abführung 103 der mit mindestens einer Schlupf-Sollbruchstelle 9 versehenen Bruteier 12 mittels der Transportvorrichtung 1.

Weitergehend im Detail umfasst das Verfahren zur Bearbeitung der Kalkschale 11 von Bruteiern 12 gemäß Fig. 1a und Fig. 5 zumindest folgende Schritte
- Schritt: Zuführung 100 der Bruteier 12 mittels einer Zuführungseinrichtung 1a,
- Schritt: Erfassung/Detektierung 101 zumindest eines Positionsbereiches der zugeführten Bruteier 12 und/oder einer Bruteier 12 enthaltenen Einlage 16 mittels einer Detektionseinrichtung 18a, die zumindest im Zuführungsbereich der Bruteier 12 enthaltenen Einlage 16 stationiert ist, und Umwandlung des jeweils erfassten Positionsbereiches in elektrische Datensignale und Verarbeitung der elektrischen Datensignale in einer Auswerte- und Steuereinheit 6 zur Positionierung einer Bearbeitungseinrichtung 7 zur Erzeugung einer Sollbruchstelle 9 in der Kalkschale 11 des Bruteies 12,
- Schritt: Bearbeitung 102, 8 der Sollbruchstelle 9 auf den Bruteiern 12 mittels der relativ zu den Eiern 12 positionierten Bearbeitungseinrichtung 7 zur Erzeugung einer Sollbruchstelle 9 in der Kalkschale 11 der Bruteier 12, wobei die von außen durchgeführte Bearbeitung 8 der Kalkschale 11 des Bruteies 12 oberhalb der mit der Kalkschale 11 vorhandenen Grenzen 17 der innerhalb des Bruteies 12 befindlichen, zum stumpfen Pol 14 gerichteten Luftkammer 13 durchgeführt wird, und
- Schritt: Abführung 103 der Bruteier 12 mit der die ursprüngliche Dicke der Kalkschale 11 verringernde Sollbruchstelle 9 mittels einer Abführungseinrichtung 1b.

Die Ausbildung der Schlupf-Sollbruchstelle 9, 9a, 9b, 9c, 9d oberhalb der umlaufenden Grenze 17 der inneren Membran 19 der Luftkammer 13 stellt eine definierte, zielgerichtete Bearbeitung am Brutei 12 dar, wobei die Ausgangspositionierung mittels des Sensors 2 oder des Sensor-Arrays und die zur Sollbruchstellen-Ausführung zugeordnete Endpositionierung des Bruteies 12, die zur Sollbruchstellen-Ausführung mit der zugehörige Einstellpositionierung der Bearbeitungseinrichtung 7 übereinstimmt, mittels des Einsatzes von in der Auswerteeinheit und Steuereinheit 6 gespeicherten programmtechnischen Mitteln durchgeführt werden.

Die angegebene gezielte Bearbeitung der harten Kalkschale 11 des Bruteies 12 kann neben der laser-optischen Bearbeitung auch mittels mechanischer, chemischer oder Wasserstrahl-Werkzeuge durchgeführt werden.
Meistens wird durch die Bearbeitung 8 der Kalkschale 11 im Wesentlichen die ursprüngliche Dicke der Kalkschale 11 an der vorgegebenen Sollbruchstelle 9 verringert. Bei Einsatz von Werkzeugen oder Bearbeitungseinrichtungen 7 zur Erzeugung einer Sollbruchstelle mit chemischen Substanzen kann die ursprüngliche Dicke zwar erhalten bleiben, aber die chemische Substanz auf der bearbeiteten Kalkschalenstelle verringert die dortige ursprüngliche Festigkeit der Kalkschale 11, so dass eine auf chemischer Basis geschwächte Schlupf-Sollbruchstelle 9, 9a, 9b, 9c, 9d ausgebildet wird.

Wesentlich ist es auch, dass die Bearbeitung bei Brut-Temperaturen durchgeführt werden kann. Dazu kann die Vorrichtung 10, z.B. ohne die Auswerte- und Steuereinheit 6, innerhalb eines bruttemperierten Gehäuses (nicht eingezeichnet) eingebracht sein.

Zusammenfassend wird ein Verfahren zur Bearbeitung der Kalkschale 11 von Bruteiern 12, in denen sich Küken entwickeln, zur Unterstützung des Schlupfes von Küken für die Mast- und Geflügelproduktion bereitgestellt, bei dem zumindest mindestens ein Brutei 12 zumindest mit der Luftkammer 13 und deren Verlauf der Grenze 17 detektiert wird und die Kalkschale 11 oberhalb der Grenze 17 der Luftkammer 13 mit einer vorgegebenen, vor dem Schlupf ausgeführten Schlupf-Sollbruchstelle 9, 9a, 9b, 9c, 9d zur Schlupfunterstützung des aus dem Brutei 12 schlüpfenden Kükens versehen wird.

### Bezugszeichenliste

- 1: Transporteinrichtung
- 1a: Zuführungseinrichtung
- 1b: Abführungseinrichtung
- 2: Sensor oder Sensor-Array
- 3: Bereich/2D-Bildbereich/3D-Bildbereich
- 4: Abstandssensor
- 5: Triangulationssensor
- 6: Auswerte- und Steuereinheit
- 7: Bearbeitungseinrichtung
- 8: Bearbeitung
- 9: Sollbruchstelle/Schlupf-Sollbruchstelle
- 9a: Sollbruchstellen-Führungsbahn
- 9b: Sollbruchstellen-Bahn
- 9c: Sollbruchstellen-Bahn
- 9d: runde Sollbruchstellen-Bahn
- 10: erfindungsgemäße Vorrichtung
- 11: Kalkschale
- 12: Brutei
- 13: Luftkammer innerhalb des Eies
- 14: stumpfer Pol
- 15: spitzer Pol
- 16: Einlage
- 17: Grenzen der Luftkammer
- 18: Detektionseinrichtung
- 18a: Detektionseinrichtung
- 19: innere Membran
- 100: Prozessschritt Zuführung
- 101: Prozessschritt Detektierung
- 102: Prozessschritt Perforierung
- 103: Prozessschritt Abführung

## Patentansprüche

1. Verfahren zur Bearbeitung der Kalkschale (11) von Bruteiern (12) zur Unterstützung des Schlupfes von Küken in der Mast- und Geflügelproduktion, wobei sich in den Bruteiern (12) Küken entwickeln,
**dadurch gekennzeichnet,**
**dass** mindestens ein Brutei (12) und zumindest dessen Luftkammer (13) detektiert werden und die Kalkschale (11) oberhalb der Grenzen (17) der Luftkammer (13) an der Kalkschale (11) des detektierten Bruteies (12) mit mindestens einer vorgegebenen, vor dem Schlupf ausgeführten Schlupf-Sollbruchstelle (9, 9a, 9b, 9c, 9d) zur Schlupfunterstützung des aus dem Brutei (12) schlüpfenden Kükens versehen wird,
zumindest folgende Schritte umfassend,
- Zuführung (100) der Bruteier (12) mittels einer Zuführungseinrichtung (1a),
- Erfassung/Detektierung (101) jeweils eines auf die Bruteier (12) und zumindest deren Luftkammern (13) bezogenen Bereiches (3) mittels einer Detektionseinrichtung (18, 18a) und Umwandlung des erfassten, auf die gehalterten Bruteier (12) bezogenen Bereiches (3) in elektrische Daten und Ver-arbeitung der umgewandelten elektrischen Bereichs-Daten zur Positionierung einer Bearbeitungseinrichtung (7) zur Erzeugung einer Sollbruchstelle an einer für die Sollbruchstellenerzeugung vorgegebenen Position in Bezug auf den zu bearbeitenden Kalkschalenbereich des Bruteies (12),
- Bearbeitung (102, 8) der Bruteier (12) mittels der Bearbeitungseinrichtung (7) zur Erzeugung einer Sollbruchstelle im Kalkschalenbereich, wobei die von außen durchgeführte Bearbeitung (8) der Kalkschale (11) des Bruteies (12) oberhalb der mit der Kalkschale (11) vorhandenen Grenzen (17) der innerhalb des Bruteies (12) befindlichen, zum stumpfen Pol (14) gerichteten Luftkammer (13) durchgeführt wird, und
- Abführung (103) der Bruteier (12) mit der Sollbruchstelle (9, 9a, 9b, 9c, 9d) mittels einer Abführungseinrichtung (1b).

2. Verfahren nach Anspruch 1,
**dadurch gekennzeichnet,**
**dass** als Detektionseinrichtung (18a) ein Sensor (2) oder ein Sensor-Array eingesetzt wird, dem wahlweise ein Abstandssensor (4) oder ein Triangulationssensor (5) zugeordnet wird.

3. Verfahren nach Anspruch 1,
**dadurch gekennzeichnet,**
**dass** der Zuführungseinrichtung (1a) und der Abführungseinrichtung (1b) als mindestens eine Transporteinrichtung (1) mindestens eine Einlage (16) mit Bruteiern (12) zugeordnet wird, in der die Bruteier (12) gehaltert einsortiert werden.

4. Verfahren nach den Ansprüchen 1 bis 3,
**dadurch gekennzeichnet,**
**dass** als erfassbarer Bereich (3) eine Markierung an einer Einlage (16) für die Bruteier (12) oder an der Transporteinrichtung (1) ausgewählt wird, wenn die Detektionseinrichtung (18) auf die Erfassung der Position der Einlage (16) ausgerichtet wird, oder dass der Bereich (3) eindimensional, zweidimensional oder dreidimensional erfasst wird, wenn die Detektionseinrichtung (18a) oberhalb der Einlage (16) angeordnet wird.

5. Verfahren nach den Ansprüchen 1 bis 4,
**dadurch gekennzeichnet,**
**dass** die Erzeugung der Sollbruchstelle (9, 9a, 9b, 9c, 9d) im Kalkschalenbereich der Luftkammer (13) oberhalb der Grenzen (17) einer inneren Membran (19) mit der Kalkschale (11) eine definierte Bearbeitung am Brutei (12) darstellt, wobei die Ausgangspositionierung mittels des Sensors (2) oder des Sensor-Arrays und die zur Sollbruchstellen-Ausführung zugeordnete Endpositionierung des Bruteies (12), die zur Sollbruchstellen-Ausführung mit der zugehörigen Einstellpositionierung der Bearbeitungseinrichtung (7) übereinstimmt, mittels des Einsatzes von in der Auswerte- und Steuereinheit (6) gespeicherten programmtechnischen Mitteln durchgeführt wird, und dass mit den erhaltenen Daten eines Abstandssensors (4) oder eines Triangulationssensors (5) oder Streiflichtsensors, wobei die Daten jeweils dem zugeführten Brutei (12) zugeordnet werden, eine genaue Positionierung der Bearbeitungseinrichtung (7) über an einer für die Sollbruchstellenerzeugung vorgegebene Position in Bezug auf den zu bearbeitenden Kalkschalenbereich des Bruteies (12) eingestellt wird.

6. Verfahren nach den Ansprüchen 3 bis 5,
**dadurch gekennzeichnet,**
**dass** die Einlage (16) in Form einer Horde der Bruteier (12) mittels der Transporteinrichtung (1) unterhalb der Detektionseinrichtung (18a) und der Bearbeitungseinrichtung (7) zur Erzeugung einer Sollbruchstelle vorbeibewegt werden, wobei mittels der Detektionseinrichtung (18a) von der Draufsicht des Bruteies (12) ein 2D-Bildbereich (3) oder ein 3D-Bildbereich erfasst wird, dessen Daten zur weiteren Verarbeitung in die Auswerte- und Steuereinheit (6) über elektrische Verbindungsleitungen geleitet werden, wobei in der Auswerte- und Steuereinheit (6) die Bilddaten des 2D-Bildbereiches (3) oder des 3D-Bildbereiches gemeinsam mit den Eiabstandsdaten des Abstandssensors (4) oder des Triangulationssensors (5) mittels aktivierter programmtechnischer Mittel verarbeitet werden und die verarbeiteten erhaltenen Signale an die Bearbeitungseinrichtung (7) zur Erzeugung einer Sollbruchstelle zur Erzeugung der Sollbruchstelle (9, 9a, 9b, 9c, 9d) weitergeleitet werden.

7. Verfahren nach den Ansprüchen 1 bis 6,
**dadurch gekennzeichnet,**
**dass** die von außen durchgeführte Bearbeitung (102, 8) der Kalkschale (11) des Bruteies (12) mittels Laser-, mechanischer, chemischer oder Wasserstrahl-Werkzeugen durchgeführt wird.

8. Vorrichtung (10) zur Bearbeitung von Kalkschalen (11) von Bruteiern (12) zur Unterstützung des Schlupfes von Küken in der Mast- und Geflügelproduktion unter Einsatz des vorgenannten Verfahrens nach den Ansprüchen 1 bis 8, zumindest umfassend
- eine Transporteinrichtung (1, 1a, 1b), mit der eine Zuführung und eine Abführung mindestens eines Bruteies (12) innerhalb der Vorrichtung (10) erfolgt,
- eine Detektionseinrichtung (18, 18a) zur Erfassung eines auf die Bruteier (12) und zumindest die dem Brutei (12) zugehörige Luftkammer (13) bezogenen Bereiches (3) und zur Umwandlung der Daten des Bereiches (3) in elektrische Daten,
- eine Auswerte- und Steuereinheit (6), die die von der Detektionseinrichtung (18, 18a) übermittelten elektrischen Daten und die Positionsdaten einer Bearbeitungseinrichtung (7) zur Erzeugung einer Sollbruchstelle oberhalb der mit der Kalkschale (11) ausgebildeten Grenzen (17) der zum stumpfen Pol (14) gerichteten Luftkammer (13) aufnimmt und verarbeitet,
- die Bearbeitungseinrichtung (7) zur Erzeugung einer Sollbruchstelle in der Kalkschale (11), die zur Bearbeitung (8) Bearbeitungssignale aus der Auswerte- und Steuereinheit (6) erhält,
wobei nach der die Schlupf-Sollbruchstelle (9, 9a, 9b, 9c, 9d) erzeugenden Bearbeitung (8) der Kalkschale (11) die Kalkschale (11) mindestens eine ausgebildete Schlupf-Sollbruchstelle (9, 9a, 9b, 9c, 9d) oberhalb der Grenzen (17) der inneren Membran (19) der zum stumpfen Pol (14) gerichteten Luftkammer (13) zur Unterstützung des Schlupfes der Küken aus dem Brutei (12) aufweist.

9. Vorrichtung nach Anspruch 8,
**dadurch gekennzeichnet,**
**dass** der Transporteinrichtung (1, 1a, 1b) mindestens eine Einlage/Horde/Schlupf- horde (16) mit Bruteiern (12) zugeordnet ist, in der die Bruteier (12) gehaltert einsortiert sind.

10. Vorrichtung nach Anspruch 9,
**dadurch gekennzeichnet,**
**dass** vorzugsweise für standardisierte oder vorab vermessene Einlagen (16) mit konstanten Abständen (A_{B}, A_{E}, A_{S}) der Eiaufnahme-Ausbuchtungen zur Bestimmung der Positionsbereiche der einsortierten Bruteier (12) Detektionseinrichtungen (18) eingesetzt sind, die nur auf die erforderliche Erfassung der Einlage (16) ausgerichtet sind, so dass die Positionsbereiche der Bruteier (12) aus den konstanten Abständen (A_{B}, A_{E}, A_{S}) ermittelbar sind.

11. Vorrichtung nach den Ansprüchen 8 bis 10,
**dadurch gekennzeichnet,**
**dass** die Detektionseinrichtung (18) zur Erfassung eines auf die Bruteier (12) bezogenen Bereiches (3) aus der Einlage (16) oder eines Positionsbereiches mindestens (3) eines Bruteies (12) in der Einlage (16) dienen, wobei die Detektionseinrichtung (18) eine vorgegebene Markierung der Einlage (16) erfasst und aus den festgelegten Abständen (A_{B}, A_{E}, A_{S}) der Eiaufnahme-Ausbuchtungen der Einlage (16) zueinander und zur Markierung der Einlage (16) der Positionsbereich des jeweiligen Bruteies (12) in der Auswerte- und Steuereinheit (6) ermittelt wird.

12. Vorrichtung nach Anspruch 8,
**dadurch gekennzeichnet,**
**dass** die Detektionseinrichtung (18a) einen Sensor (2) oder ein Sensor-Array wahlweise mit einem Abstandssensor (4) oder mit einem Triangulationssensor (5) umfasst.

13. Vorrichtung nach den Ansprüchen 8 bis 12,
**dadurch gekennzeichnet,**
**dass** sie zumindest umfasst
- eine Transporteinrichtung (1), der mindestens eine Einlage (16) mit Bruteiern (12) zugeordnet ist, in der die Bruteier (12) gehaltert einsortiert sind,
- mindestens einen als Detektionseinrichtung (18a) ausgebildeten Sensor (2) oder Sensor-Array zur Erfassung eines 2D-Bildbereich (3) oder eines 3D-Bildbereiches in Draufsicht auf den Kalkschalenbereich mindestens eines zugeführten Bruteies (12) und dessen Luftkammer (13) einschließlich der Grenzen (17) und wahlweise mindestens einen Abstandssensor (4) oder einen Triangulationssensor (5), wobei der Sensor (4; 5) die Positionsdaten des zugeführten Bruteies (12) und der Luftkammer (13) erfasst,
- eine Auswerte- und Steuereinheit (6), die die Eipositionsdaten, die Luftkammerpositionsdaten und die Positionsdaten einer Bearbeitungseinrichtung (7) zur Erzeugung einer Sollbruchstelle aufnimmt und verarbeitet,
- die Bearbeitungseinrichtung (7) zur Erzeugung einer Sollbruchstelle (9, 9a, 9b, 9c, 9d) in der oberhalb der Grenzen (17) befindlichen Kalkschale (11), die zur Bearbeitung (8) Bearbeitungssignale aus der Auswerte- und Steuereinheit (6) erhält,
wobei die Bearbeitungseinrichtung (7) zur Erzeugung einer Sollbruchstelle eine laser-optische Einrichtung ist, die mit ihrem Laserstrahl eine Perforation der Kalkschale (11) durchführt und die Sollbruchstelle (9, 9a, 9b, 9c, 9d) ausbildet,
wobei nach der Bearbeitung (8) der Kalkschale (11) die Kalkschale (11) oberhalb der Grenzen (17) der zum stumpfen Pol (14) gerichteten Luftkammer (13) eine Sollbruchstelle (9, 9a, 9b, 9c, 9d) aufweist.

14. Vorrichtung nach Anspruch 8,
**dadurch gekennzeichnet,**
**dass** die Transporteinrichtung (1) als Zuführungseinrichtung (1a) und als Abführungseinrichtung (1b) in durchgängiger Form ausgebildet ist.

15. Vorrichtung nach den Ansprüchen 8 bis 14,
**dadurch gekennzeichnet,**
**dass** zumindest der Sensor (2) oder das Sensor-Array und die Bearbeitungseinrichtung (7) oberhalb der Transporteinrichtung (1, 1a, 1b) sowie oberhalb der in der transportierten Einlage (16) befindlichen Bruteier (12) angeordnet sind.

16. Vorrichtung nach Anspruch 8,
**dadurch gekennzeichnet,**
**dass** mittels einer Bearbeitungseinrichtung (7) zur Erzeugung einer Sollbruchstelle mit Einsatz mindestens einer chemischen Substanz die auf der vorgegeben bearbeiteten Kalkschalenstelle aufgebrachte chemische Substanz die dortige ursprüngliche Festigkeit der Kalkschale (11) verringert und eine auf chemischer Basis ausgebildete Schlupf-Sollbruchstelle (9, 9a, 9b, 9c, 9d) vorhanden ist.

## Claims

1. A method for handling calcium carbonate shells (11) of hatching eggs (12) in order to help chicks hatch on industrial and other poultry farms, wherein chicks develop in the hatching eggs (12),
**characterized in that**
at least one hatching egg (12) and at least its air cell (13) are detected and the calcium carbonate shell (11) is equipped prior to hatching with at least one predetermined hatch breaking point (9, 9a, 9b, 9c, 9d) above the boundaries (17) of the air cell (13) on the calcium carbonate shell (11) of the detected hatching egg (12) in order to help chicks hatch from the hatching egg (12), comprising at least the following steps,
- supplying (100) the hatching eggs (12) by means of a supply device (1a),
- acquiring/detecting (101) a zone (3) associated with the hatching eggs (12) and at least their air cells (13) by means of a detection device (18, 18a) and converting the detected zone (3) associated with the fixated hatching eggs (12) into electrical data and processing the converted electrical zone data for positioning a handling device (7) for creating a predetermined breaking point at a position predetermined for creating such breaking point with respect to the calcium carbonate shell area of the hatching egg (12) to be handled,
- handling (102, 8) the hatching eggs (12) by means of the handling device (7) to create a breaking point in the calcium carbonate shell area, wherein the handling (8) of the calcium carbonate shell (11) of the hatching egg (12) is performed from outside above the boundaries (17) on said calcium carbonate shell (11) of the air cell (13) located inside the hatching egg (12) and oriented towards the large end (14), and
- discharging (103) the hatching eggs (12) having the predetermined breaking point (9, 9a, 9b, 9c, 9d) by means of a discharge device (1b).

2. The method according to claim 1,
**characterized in that**
the detection device (18a) used is a sensor (2) or sensor array which is selectively associated with a proximity sensor (4) or a triangulation sensor (5).

3. The method according to claim 1,
**characterized in that**
at least one insert (16) with hatching eggs (12) in which the hatching eggs (12) are deposited and fixated is associated as a conveying device (1) with the supply device (1a) and the discharge device (1b).

4. The method according to claims 1 to 3,
**characterized in that**
a marking on an insert (16) for the hatching eggs (12) or on the conveying device (1) is selected as detectable zone (3) when the detection device (18) is arranged for detecting the position of the insert (16), or that one, two, or three dimensions of said zone (3) are detected when the detection device (18a) is positioned above the insert (16).

5. The method according to claims 1 to 4,
**characterized in that**
creating the predetermined breaking point (9, 9a, 9b, 9c, 9d) in the calcium carbonate shell area of the air cell (13) above the boundaries (17) of an inner membrane (19) with the calcium carbonate shell (11) represents a defined handling of the hatching egg (12), wherein the initial positioning by means of the sensor (2) or the sensor array and the end positioning of the hatching egg (12) assigned for creating the predetermined breaking point, which coincides with the associated setting positioning of the handling device (7) for creating the predetermined breaking point, are performed using programmatic means stored in the evaluation and control unit (6), and wherein the data obtained from a proximity sensor (4) or a triangulation sensor (5) or side light sensor, said data being assigned to the respective supplied hatching egg (12), is used for setting the exact positioning of the handling device (7) above a position predetermined for creating the predetermined breaking point with respect to the calcium carbonate shell area of the hatching egg (12) to be handled.

6. The method according to claims 3 to 5,
**characterized in that**
the insert (16) in the form of a rack of hatching eggs (12) is moved past by means of the conveying device (1) underneath the detection device (18a) and the handling device (7) for creating the predetermined breaking point, wherein a 2D image zone (3) or a 3D image zone of the top view of the hatching egg (12) is captured using the detection device (18a), the data of which zone is sent via electric connecting lines into the evaluation and control unit (6) for further processing, wherein the image data of the 2D image zone (3) or the 3D image zone are processed together with the egg distance data from the proximity sensor (4) or the triangulation sensor (5) using activated programmatic means in the evaluation and control unit (6) and the processed signals obtained are forwarded to the handling device (7) for creating a predetermined breaking point in order to create the predetermined breaking point (9, 9a, 9b, 9c, 9d).

7. The method according to claims 1 to 6,
**characterized in that**
the external handling (102, 8) of the calcium carbonate shell (11) of the hatching egg (12) is performed using laser, mechanical, chemical, or water jet tools.

8. A device (10) for handling calcium carbonate shells (11) of hatching eggs (12) in order to help chicks hatch on industrial and other poultry farms using the above-mentioned method according to claims 1 to 8, at least comprising
- a conveying device (1, 1a, 1b) with which at least one hatching egg (12) is supplied and discharged within the device (10),
- a detection device (18, 18a) for detecting a zone (3) associated with the hatching eggs (12) and at least to the air cell (13) associated with the hatching egg (12) and for converting the data of the zone (3) into electrical data,
- an evaluation and control device (6) which acquires and processes the electrical data transmitted by the detection device (18, 18a) and the position data from a handling device (7) for creating a predetermined breaking point above the boundaries (17) formed with the calcium carbonate shell (11) of the air cell (13) oriented towards the large end (14),
- the handling device (7) for creating a predetermined breaking point in the calcium carbonate shell (11), which receives handling signals from the evaluation and control unit (6) for handling (8),
wherein after the handling (8) of the calcium carbonate shell (11) which creates the predetermined hatch breaking point (9, 9a, 9b, 9c, 9d), the calcium carbonate shell (11) comprises at least one created hatch breaking point (9, 9a, 9b, 9c, 9d) above the boundaries (17) of the inner membrane (19) of the air cell (13) oriented towards the large end (14) in order to help chicks hatch from the hatching egg (12).

9. The device according to claim 8,
**characterized in that**
that at least one insert/rack/hatching rack (16) with hatching eggs (12) in which the hatching eggs (12) are deposited and fixated is associated with the conveying device (1, 1a, 1b).

10. The device according to claim 9,
**characterized in that**
that preferably detection devices (18) are used for standardized or premeasured inserts (16) with constant distances (A_{B}, A_{E}, A_{S}) of the egg receiving wells to determine the position ranges of the deposited hatching eggs (12) therein which are only arranged for the required detection of the insert (16), such that the position ranges of the hatching eggs (12) can be determined from the constant distances (A_{B}, A_{E}, A_{S}).

11. The device according to claims 8 to 10,
**characterized in that**
the detection device (18) for detecting a zone (3) associated with the hatching eggs (12) from the insert (16) or a position range uses at least (3) of a hatching egg (12) in the insert (16), wherein the detection device (18) detects a predetermined marking of the insert (16) and the position range of the respective hatching egg (12) is determined based on the specified distances (A_{B}, A_{E}, A_{S}) of the egg receiving wells of the insert (16) and to the marking of the insert (16) in the evaluation and control unit (6).

12. The device according to claim 8,
**characterized in that**
the detection device (18a) includes a sensor (2) or a sensor array, optionally with a proximity sensor (4) or with a triangulation sensor (5).

13. The device according to claims 8 to 12,
**characterized in that**
it at least comprises
- a conveying device (1) that is associated with at least one insert (16) with hatching eggs (12) in which the hatching eggs (12) are deposited and fixated,
- at least one sensor (2) or sensor array configured as a detection device (18a) for detecting a 2D image zone (3) or a 3D image zone in top view onto the calcium carbonate shell area of at least one supplied hatching egg (12) and its air cell (13) including the boundaries (17) and optionally at least one proximity sensor (4) or a triangulation sensor (5), wherein the sensor (4; 5) detects the position data of the supplied hatching egg (12) and the air cell (13),
- an evaluation and control unit (6), which receives and processes the egg position data, the air cell position data, and the position data of a handling device (7) for creating a predetermined breaking point,
- the handling device (7) for creating a predetermined breaking point (9, 9a, 9b, 9c, 9d) in the calcium carbonate shell (11) located above the boundaries (17) receives handling signals from the evaluation and control unit (6) for handling (8),
wherein the handling device (7) for creating a predetermined breaking point is a laser optical device which performs a perforation of the calcium carbonate shell (11) with its laser beam and creates the predetermined breaking point (9, 9a, 9b, 9c, 9d),
wherein, after the handling (8) of the calcium carbonate shell (11), the calcium carbonate shell (11) comprises a predetermined breaking point (9, 9a, 9b, 9c, 9d) above the boundaries (17) of the air cell (13) oriented towards the large end (14).

14. The device according to claim 8,
**characterized in that**
the conveying device (1) is configured in an integral form as a supply device (1a) and a discharge device (1b).

15. The device according to claims 8 to 14,
**characterized in that**
at least the sensor (2) or the sensor array and the handling device (7) are disposed above the conveying device (1, 1a, 1b) as well as above the hatching eggs (12) located in the conveyed insert (16).

16. The device according to claim 8,
**characterized in that**
if a predetermined breaking point is created by a handling device (7) by means of at least one chemical substance, the chemical substance applied to the predetermined site of the calcium carbonate shell diminishes the original hardness of the calcium carbonate shell (11) and thus creates a predetermined hatch breaking point (9, 9a, 9b, 9c, 9d) on a chemical basis.

## Revendications

1. Procédé servant à traiter des coquilles calcaires (11) d'oeufs à couver (12) afin d'aider à l'éclosion de poussins dans le cadre de la production de volailles, où des poussins se développent dans les oeufs à couver (12),
**caractérisé en ce**
**qu'**au moins un oeuf à couver (12) et au moins la chambre à air (13) de celui-ci sont détectés, et que la coquille calcaire (11) est dotée, au-dessus des limites (17) de la chambre à air (13) située sur la coquille calcaire (11) de l'oeuf à couver (12) détecté et afin d'aider au poussin d'éclore de l'oeuf à couver (12), d'au moins un emplacement de rupture théorique (9, 9a, 9b, 9c, 9d) présélectionné qui, lui, est produit avant l'éclosion,
comprenant au moins,
- l'alimentation (100) des oeufs à couver (12) moyennant un dispositif d'alimentation (1a),
- la saisie/la détection (101) d'une zone (3) qui est rapportée chaque fois aux oeufs à couver (12) et au moins aux chambres à air (13) de ceux-ci, ladite détection étant effectuée par un dispositif de détection (18, 18a) et obtenue par la transformation en données électriques de la zone (3) saisie et rapportée aux oeufs à couver (12) fixés dans un insert, ainsi que par le traitement des données électriques transformées de la zone concernée, ceci afin de positionner un dispositif de traitement (7) servant à produire un emplacement de rupture théorique sur une position présélectionnée pour la production de celui-ci par rapport à la zone de coquille calcaire à traiter de l'oeuf à couver (12),
- le traitement (102, 8) des oeufs à couver (12) à l'aide du dispositif de traitement (7) afin de produire un emplacement de rupture théorique dans la zone de coquille calcaire, où le traitement (8) de la coquille calcaire (11) de l'oeuf à couver (12) est effectué de l'extérieur, c'est-à-dire au-dessus des limites (17) de la chambre à air (13) de la coquille calcaire (11) de l'oeuf à couver (12), la chambre à air (13) étant située à l'intérieur de l'oeuf à couver (12) et orientée en direction du pôle plat (14),
et
- l'évacuation (103) des oeufs à couver (12) avec l'emplacement de rupture théorique (9, 9a, 9b, 9c, 9d) au moyen d'un dispositif d'évacuation (1b).

2. Procédé suivant la revendication 1, **caractérisé en ce qu'**un capteur (2) ou un capteur à barrettes est utilisé en tant que dispositif de détection (18a), auquel sera sélectivement associé un capteur de distance (4) ou un capteur de triangulation (5).

3. Procédé suivant la revendication 1, **caractérisé en ce que** tant au dispositif d'alimentation (1a) qu'au dispositif d'évacuation (1b) qui, eux, sont conçus en tant qu'au moins un dispositif de transport (1), est associé au moins un insert (16) avec des oeufs à couver (12), dans lequel seront rangés et fixés les oeufs à couver (12).

4. Procédé suivant les revendications 1 à 3, **caractérisé en ce que**, lorsque le dispositif de détection (18) est axé sur la saisie de la position de l'insert (16), un marquage est choisi en tant que zone à saisir (3), soit sur un insert (16) destiné aux oeufs à couver (12), soit sur le dispositif de transport (1), ou lorsque le dispositif de détection (18a) est disposé au-dessus de l'insert (16), ladite zone (3) est saisie de façon monodimensionnelle, bidimensionnelle ou tridimensionnelle.

5. Procédé suivant les revendications 1 à 4, **caractérisé en ce que** la production de l'emplacement de rupture théorique (9, 9a, 9b, 9c, 9d) constitue, au niveau de la coquille calcaire de la chambre à air (13) et au-dessus des limites (17) de la membrane intérieure (19) et la coquille calcaire (11), un traitement défini de l'oeuf à couver (12), où le positionnement initial est effectué à l'aide du capteur (2) ou du capteur à barrettes, et où le positionnement final de l'oeuf à couver (12) associé à la production des emplacements de rupture théorique qui, lui, correspond au positionnement de réglage respectif du dispositif de traitement (7), est effectué à l'aide de moyens de programmation mémorisés dans l'unité d'analyse et de commande (6), et qu'il y est réglé un positionnement exacte du dispositif de traitement (7), ceci à partir des données obtenues par un capteur de distance (4) ou par un capteur de triangulation (5) ou par un capteur de lumière diffusée, lesdites donnés étant associées à chaque oeuf à couver (12) alimenté, ainsi qu'à l'aide d'une position présélectionnée pour la production des emplacements de rupture théorique et rapportée à la zone de coquille calcaire de l'oeuf à couver (12).

6. Procédé suivant les revendications 3 à 5, **caractérisé en ce que** l'insert (16) est un panier d'oeufs à couver (12) qui est passé, à l'aide du dispositif de transport (1) et afin de produire un emplacement de rupture théorique, pardessus du dispositif de détection (18a) et du dispositif de traitement (7), où le dispositif de détection (18a) saisit une zone d'image bidimensionnelle (3) ou une zone d'image tridimensionnelle de la vue de dessus de l'oeuf à couver (12), dont les données saisies seront transmises à l'aide de liaisons électriques à l'unité d'analyse et de commande (6) qui, elle, assure leur traitement ultérieur. Seront traitées dans ladite unité d'analyse et de commande (6), à l'aide de moyens de programmation activés, les données graphiques de la zone d'image bidimensionnelle (3) ou de la zone d'image tridimensionnelle, ceci en commun avec les données de distance des oeufs saisies par le capteur de distance (4) ou par le capteur de triangulation (5), les signaux obtenus et traités étant transmis, afin de produire un emplacement de rupture théorique qui, en l'occurrence, constitue l'emplacement de rupture théorique (9, 9a, 9b, 9c, 9d), au dispositif de traitement (7).

7. Procédé suivant les revendications 1 à 6, **caractérisé en ce que** le traitement (102, 8) de la coquille calcaire (11) de l'oeuf à couver (12) effectué de l'extérieur est réalisé à l'aide d'outils laser, mécaniques, chimiques ou de jet d'eau.

8. Dispositif (10) servant à traiter des coquilles calcaires (11) d'oeufs à couver (12) afin d'aider à l'éclosion de poussins dans la cadre de la production industrielle de volailles, ceci en appliquant le procédé précité suivant les revendications 1 à 8. Ledit dispositif comprend au moins,
- un dispositif de transport (1, 1a, 1b), lequel permet d'alimenter au moins un oeuf à couver (12) à l'intérieur du dispositif (10) et de l'en évacuer,
- un dispositif de détection (18, 18a) servant à saisir une zone spécifique des oeufs à couver (12) et au moins de la chambre à air (13) associée à l'oeuf à couver (12), et à convertir les données de la zone (3) en données électriques,
- une unité d'analyse et de commande (6) qui reçoit et traite les données électriques transmises par le dispositif de détection (18, 18a) et les données de position d'un dispositif de traitement (7) servant à produire un emplacement de rupture théorique au-dessus des limites (17) matérialisées sur la coquille calcaire (11) de la chambre à air (13) orientée vers la pôle plat (14),
- le dispositif de traitement (7) servant à produire un emplacement de rupture théorique dans la coquille calcaire (11), laquelle reçoit aux fins de traitement (8) des signaux de traitement en provenance de l'unité d'analyse et de commande (6),
après le traitement (8) conduisant à la production de l'emplacement de rupture théorique d'éclosion (9, 9a, 9b, 9c, 9d) de la coquille calcaire (11), la coquille calcaire (11) présente au moins un emplacement de rupture théorique d'éclosion (9, 9a, 9b, 9c, 9d) matérialisé au-dessus des limites (17) de la membrane intérieure (19) de la chambre à air orientée vers le pôle plat (14), ceci pour aider les poussins à sortir de l'oeuf à couver (12)..

9. Dispositif suivant la revendication 8, **caractérisé en ce qu'**au moins un insert/panier/panier d'éclosion (16) dans lequel sont rangés et fixés des oeufs à couver (12), est associé au dispositif de transport (1, 1a, 1b).

10. Dispositif suivant la revendication 9, **caractérisé en ce que**, de préférence pour inserts (16) standardisés ou mesurés au préalable et dont les distances (A_{B}, A_{E}, A_{S}) entre les creux destinés à recevoir les oeufs sont constantes, des dispositifs de détection (18) sont utilisés afin de déterminer les zones de position des oeufs à couver (12), ces dispositifs de détection (18) n'étant axés que sur la saisie nécessaire de l'insert (16), de telle sorte que les zones de position des oeufs à couver (12) puissent être déterminées à partir des distances (A_{B}, A_{E}, A_{S}) constantes.

11. Dispositif suivant les revendications 8 à 10, **caractérisé en ce que** le dispositif de détection (18) servant à saisir une zone (3) rapportée aux oeufs à couver (12) de l'insert (16) ou une zone de position (3) d'au moins un oeuf à couver alimenté (12) dans l'insert (16), où le dispositif de détection (18) saisit un marquage prédéfini de l'insert (16), et où dans l'unité d'analyse et de commande (6) est déterminée, à partir des distances fixées (A_{B}, A_{E}, A_{S}) entre les creux destinés à recevoir les oeufs dans l'insert (16) et afin d'assurer le marquage de l'insert (16), la zone de position de chaque oeuf à couver (12).

12. Dispositif suivant la revendication 8, **caractérisé en ce que** le dispositif de détection (18a) comprend un capteur (2) ou un capteur à barrettes qui, lui, est sélectivement doté d'un capteur de distance (4) ou d'un capteur de triangulation (5).

13. Dispositif suivant les revendications 8 à 12, **caractérisé en ce que** ledit dispositif comprend au moins
- un dispositif de transport (1), auquel est associé au moins un insert (16) avec des oeufs à couver (12), ces derniers étant rangés et fixés dans l'insert,
- au moins un capteur (2) ou un capteur à barrettes conçu en tant que dispositif de détection (18a) servant à saisir, en vue de dessus sur la zone de la coquille calcaire, une zone d'image bidimensionnelle (3) ou tridimensionnelle d'au moins un oeuf à couver (12) et de la chambre à air (13) de celui-ci, y compris les limites (17), et au choix, au moins un capteur de distance (4) ou un capteur de triangulation (5), le capteur (4; 5) assurant la saisie des données de position de l'oeuf à couver (12) alimenté et de la chambre à air (13),
- une unité d'analyse et de commande (6) qui, afin de produire un emplacement de rupture théorique, saisit et traite les donnés de position des oeufs, les données de position des chambres à air et les données de position d'un dispositif de traitement (7) servant à produire un emplacement de rupture théorique,
- le dispositif de traitement (7) qui, afin de produire un emplacement de rupture théorique (9, 9a, 9b, 9c, 9d) dans la coquille calcaire (11) située au-dessus des limites (17), reçoit les signaux nécessaires au traitement (8) qui, eux, sont transmis par l'unité d'analyse et de commande (6),
où le dispositif de traitement (7) servant à produire un emplacement de rupture théorique (9, 9a, 9b, 9c, 9d) est un dispositif optique à laser dont le rayon laser perfore la coquille calcaire (11) et produit l'emplacement de rupture théorique (9, 9a, 9b, 9c, 9d),
et où après le traitement (8) de la coquille calcaire (11), celle-ci présente, au-dessus des limites (17) de la chambre à air (13) orientée vers le pôle plat (14), un emplacement de rupture théorique (9, 9a, 9b, 9c, 9d).

14. Dispositif suivant la revendication 8, **caractérisé en ce que** le dispositif de transport (1) est conçu, de façon continue, en tant que dispositif d'alimentation (1a) et en tant que dispositif d'évacuation (1b).

15. Dispositif suivant les revendications 8 à 14, **caractérisé en ce qu'**au moins le capteur (2) ou le capteur à barrettes et le dispositif de traitement (7) sont disposés au-dessus du dispositif de transport (1, 1a, 1b) et au-dessus des oeufs à couver (12) situés dans l'insert (16) transporté.

16. Dispositif suivant la revendication 8, **caractérisé en ce qu'**au moins une substance chimique est appliquée, à l'aide d'un dispositif de traitement (7) servant à produire un emplacement de rupture théorique, à l'endroit de la coquille calcaire qui, lui, a été traité au préalable. Ladite substance chimique fait que la solidité originale de la coquille calcaire (11) y soit réduite et qu'il y soit produit, à base chimique, un emplacement de rupture théorique d'éclosion (9, 9a, 9b, 9c, 9d).
